# EUROPÄISCHE PATENTANMELDUNG

(11) **EP 4 793 607 A1**
(43) Veröffentlichungstag der Anmeldung: **19.08.2026**
(21) Anmeldenummer: 26156161.7
(22) Anmeldetag: 03.02.2026
(51) Int. Cl.: G01K 11/24, G01K 11/26, G01K 13/02, G01K 17/10

(54) **VERFAHREN UND MESSEINRICHTUNG ZUR ERMITTLUNG EINER FLUIDTEMPERATUR**

(30) Priorität: 18.02.2025 DE 102025106112
(71) Anmelder: Diehl Metering GmbH, 91522 Ansbach (DE)
(72) Erfinder: Hofmann, Alexander, 91623 Sachsen (DE); Ritter, Steffen, 91572 Bechhofen (DE); Herrmann, Florian, 91731 Langfurth (DE); Madinger, Andreas, 91522 Ansbach (DE)
(74) Vertreter: Diehl Patentabteilung

(57) **Zusammenfassung**

Verfahren zur Ermittlung einer Fluidtemperatur (1) eines durch ein Messvolumen (2) geführtes oder in dem Messvolumen (2) befindlichen Fluids (3) durch eine Messeinrichtung (4) mit einem ersten und einem zweiten Ultraschallwandler (5, 6), wobei durch den ersten Ultraschallwandler (5) ein Ultraschallsignal (7) abgestrahlt und über das Fluid (3) zu dem zweiten Ultraschallwandler (6) übertragen wird, wodurch über den zweiten Ultraschallwandler (6) ein Empfangssignal (9) erfasst wird, wobei für einen Zeitabschnitt (11) des Empfangssignals (9) eine Schwingungsfrequenz (12) des Empfangssignals (9) ermittelt wird, wobei die Fluidtemperatur (1) in Abhängigkeit der Schwingungsfrequenz (12) ermittelt wird.

## Beschreibung

Die Erfindung betrifft ein Verfahren zur Ermittlung einer Fluidtemperatur eines durch ein Messvolumen geführten oder in dem Messvolumen befindlichen Fluids durch eine Messeinrichtung mit einem ersten und einem zweiten Ultraschallwandler, wobei durch den ersten Ultraschallwandler ein Ultraschallsignal abgestrahlt und über das Fluid zu dem zweiten Ultraschallwandler übertragen wird, wodurch über den zweiten Ultraschallwandler ein Empfangssignal erfasst wird. Daneben betrifft die Erfindung eine Messeinrichtung und ein Leitungssystem.

In Durchflusszählern wird häufig eine Temperatur des den Durchflusszähler durchströmenden Fluids ermittelt, um diese Temperatur bei der Ermittlung des Durchflussvolumens zu berücksichtigen. Zudem ist eine Temperaturfassung beispielsweise zur Ermittlung einer zugeführten Wärmemenge in Wärmezählern erforderlich. Typischerweise wird zur Temperaturerfassung ein mit dem Fluid in Kontakt stehender Temperatursensor, beispielsweise ein Messwiderstand, genutzt, der durch eine Steuereinrichtung des Durchflusserzählers ausgelesen wird. Die Nutzung eines Temperatursensors führt jedoch zu zusätzlichem Kosten und zusätzlichem Aufwand zur Implementierung des Durchflusszählers.

Die Druckschrift US 2022 / 0 146 330 A1 schlägt vor, die Temperatur eines durch einen Durchflusszählern strömenden Fluids aus einer ermittelten Schallgeschwindigkeit im Fluid zu ermitteln. Da sich hierbei jedoch eine Uneindeutigkeiten der ermittelten Temperatur ergibt, wird zusätzlich die Amplitude des Ultraschallempfangssignals ausgewertet, um diese Uneindeutigkeit aufzuheben. Da diese Amplitude jedoch von einer Vielzahl von Einflussfaktoren abhängt und störanfällig ist, wird durch dieses Vorgehen zum Teil nicht die gewünschte Robustheit und Genauigkeit der Messung erreicht.

Der Erfindung liegt somit die Aufgabe zugrunde, einen verbesserten Ansatz zur Ermittlung einer Fluidtemperatur anzugeben, der insbesondere in Durchflusszählern mit geringem Aufwand abwendbar ist und eine hohe Robustheit der Temperaturermittlung erreicht.

Die Aufgabe wird durch ein Verfahren eingangs genannter Art gelöst, wobei für einen Zeitabschnitt des Empfangssignals eine Schwingungsfrequenz des Empfangssignals ermittelt wird, wobei die Fluidtemperatur in Abhängigkeit der Schwingungsfrequenz ermittelt wird.

Im Rahmen der Erfindung wird ausgenutzt, dass die Frequenz des Empfangssignal bei Ultraschallmessungen, beispielsweise bei Durchflussmessungen nach dem Laufzeitprinzip, von der Temperatur des die Ultraschallwellen übertragenen Fluids abhängt. Dies gilt insbesondere für jenen Teil des Empfangssignals, der aus einem Nachschwingen des ersten Ultraschallwandlers nach dem Ende seiner aktiven Anregung resultiert. Somit kann insbesondere jener Zeitabschnitt des Empfangssignals betrachtet werden, der zeitlich um eine voraussichtliche Laufzeit des Ultraschallsignals von dem ersten Ultraschallwandler zu dem zweiten Ultraschallwandler von dem Ende der aktiven Anregung des ersten Ultraschallwandlers beabstandet ist und/oder in dem die Amplitude des Empfangssignal abfällt.

Nach einem Ende der aktiven Anregung kann angenommen werden, dass das Nachschwingen des jeweiligen Ultraschallwandlers durch eine Resonanzfrequenz des Ultraschallwandlers beziehungsweise des Messsystems dominiert ist. Aufgrund der Kopplung des jeweiligen Ultraschallwandlers an das Fluid beeinflusst das Fluid und insbesondere dessen Fluidtemperatur jedoch die tatsächlich vorliegende Resonanzfrequenz und somit auch die Frequenz des Empfangssignals.

Die Frequenz des Empfangssignals im Zeitabschnitt kann beispielsweise durch eine Phasenregelschleife oder durch ein Zählen von Nulldurchgänge oder durch ein Messen von Zeitabständen zwischen Nulldurchgängen des Eingangssignals ermittelt werden. In einer bevorzugten Ausgestaltung erfolgt jedoch eine Frequenzanalyse des Empfangssignals. Hierzu kann das Empfangssignal oder ein, insbesondere durch eine Frequenzumsetzung und/oder Filterung und/oder Verstärkung, aus dem Empfangssignal gewonnenes Zwischensignal insbesondere zunächst digitalisiert werden. Anschließend kann das digitalisierte Signal, beispielsweise mittels einer schnellen Fouriertransformation, in den Frequenzraum umgesetzt werden, wonach die Schwingungsfrequenz insbesondere durch Detektion des Maximums in der Frequenzraumdarstellung ermittelt werden kann. Eine Frequenzumsetzung vor der Digitalisierung kann zweckmäßig sein, um einen Analog-Digital-Umsetzer mit einer geringeren Frequenzbandbreite nutzen zu können.

In Versuchen im Rahmen der Entwicklung der Erfindung wurde erkannt, dass der Zusammenhang zwischen der ermittelten Schwingungsfrequenz und der Fluidtemperatur zumindest näherungsweise linear ist. Beispielsweise wurde bei einer Temperatursteigerung der Fluidtemperatur eines durch das Messrohr eines Durchflusserzählers geführten Fluids von 20°C auf 90°C ein zumindest näherungsweise linearer Anstieg der beobachteten Schwingungsfrequenz des Empfangssignals um ungefähr 5 kHz beobachtet. Da im relevanten Zeitintervall typischerweise eine Vielzahl von Oszillationen beobachtet werden können, kann somit prinzipiell bereits auf Basis eines Empfangssignals einer einzelnen Ultraschallmessung eine Ermittlung der Fluidtemperatur des Fluids erfolgen. Da die auf Basis einer einzelnen Ultraschallmessung ermittelte Schwingungsfrequenz jedoch typischerweise merklich rauschbehaftet ist, ist ohne eine Berücksichtigung weiterer, später noch diskutierter Messgrößen die Fluidtemperatur typischerweise nur mit relativ geringer Auflösung beziehungsweise Genauigkeit ermittelbar.

Die Genauigkeit kann durch eine Mittelwertbildung mehrerer ermittelter Schwingungsfrequenzen beziehungsweise Fluidtemperaturen verbessert werden. Erfolgt die Temperaturermittlung beispielsweise im Rahmen einer Durchflussmessung, bei der in an sich bekannter Weise ein Laufzeitunterschied zwischen der Laufzeit eines Ultraschallsignals von dem ersten zu dem zweiten Ultraschallwandler und der Laufzeit eines weiteren Ultraschallsignals von dem zweiten zu dem ersten Ultraschallwandler ausgewertet wird, so kann beispielsweise für jede der Messrichtungen eine vorläufige Fluidtemperatur auf Basis der Schwingungsfrequenz des jeweiligen Empfangssignals am jeweiligen empfangenden Ultraschallwandler ermittelt werden und die endgültige Fluidtemperatur kann als Mittelwert der vorläufigen Fluidtemperaturen ermittelt werden.

Da in den meisten Anwendungsfällen zudem davon ausgegangen werden kann, dass sich die Temperatur des Fluids verglichen mit der erforderlichen Messdauer zur Temperaturermittlung beziehungsweise zur Ermittlung eines Durchflusses nur langsam ändert, kann die Messgenauigkeit durch ein mehrfaches Messen und eine anschließende Durchschnittsbildung der hierbei ermittelten Fluidtemperaturen oder Schwingungsfrequenzen weiter erhöht werden.

Besonders bevorzugt kann die Genauigkeit der Bestimmung der Fluidtemperatur jedoch dadurch verbessert werden, dass zusätzlich Laufzeiten von Ultraschallsignalen zwischen den Ultraschallwandlern beziehungsweise eine auf Basis dieser Laufzeiten ermittelte Schallgeschwindigkeit im Fluid berücksichtigt wird.

Insbesondere kann eine erste Laufzeit des Ultraschallsignals von dem ersten Ultraschallwandler zu dem zweiten Ultraschallwandler und eine zweite Laufzeit eines weiteren Ultraschallsignals von dem zweiten Ultraschallwandler zu dem ersten Ultraschallwandler ermittelt wird, wobei die Fluidtemperatur in zusätzlicher Abhängigkeit von der ersten und zweiten Laufzeit ermittelt wird.

Auf Basis der ersten und zweiten Laufzeit kann insbesondere die Schallgeschwindigkeit der Ultraschallsignale im Fluid ermittelt werden. Ist der Abstand der Ultraschallwandler entlang dem Ausbreitungspfad der Ultraschallsignale bekannt, kann die Schallgeschwindigkeit näherungsweise als Quotient aus der doppelten Pfadlänge und der Summe der ersten und zweiten Laufzeit ermittelt werden. Zur Verbesserung der Genauigkeit können hierbei Laufzeitoffsets, die beispielsweise aufgrund des Ansprechverhaltens der Ultraschallwandler und/oder des Kopplungspfades zwischen dem jeweiligen Ultraschallwandler und dem Fluid und/oder der konkreten Ausgestaltung der Messelektronik resultieren können, berücksichtigt werden. Alternativ wäre es beispielsweise auch möglich, einen im Rahmen einer Kalibrierung der Messeinrichtung ermittelten Zusammenhang zwischen der Summe aus der ersten und zweiten Laufzeit und der Schallgeschwindigkeit beziehungsweise der Fluidtemperatur des Fluids zu nutzen.

Die Ermittlung der Schallgeschwindigkeit beziehungsweise der Temperatur des Fluids auf Basis der ersten und zweiten Laufzeiten ermöglicht zwar, wie beispielsweise auch in der eingangs zitierten Druckschrift US 2022 / 0 146 330 A1 erläutert wird, eine gute Ermittlungsgenauigkeit, ist jedoch für sich genommen uneindeutig, da beispielsweise für Wasser und wasserhaltige Fluidgemische die Schallgeschwindigkeit zunächst bis zu einer Grenztemperatur ansteigt und anschließend wieder abfällt. Für weitgehend reines Wasser, wie es beispielsweise in Wasserleitungssystemen gefördert wird, resultiert die maximale Schallgeschwindigkeit bei ungefähr 73°C. Somit tritt die gleiche Schallgeschwindigkeit jeweils bei einer Temperatur unterhalb und oberhalb von diesem Maximum auf.

Da jedoch, wie bereits obig erläutert, ein zumindest näherungsweise linearer oder zumindest monotoner Zusammenhang zwischen der Schwingungsfrequenz des Empfangssignals und der Fluidtemperatur existiert, kann im erfindungsgemäßen Verfahren auf Basis der ermittelten Schwingungsfrequenz unterschieden werden, welche der beiden potentiell zu der ermittelten Schallgeschwindigkeit führenden Fluidtemperaturen der tatsächlich vorliegenden Fluidtemperatur entspricht.

Insbesondere kann zunächst in Abhängigkeit der Schwingungsfrequenz des Empfangssignals ein vorläufiger Temperaturwert für die Fluidtemperatur ermittelt werden, wonach
- in dem Fall, dass der vorläufige Temperaturwert kleiner oder gleich zu einem ersten vorgegebenen Grenzwert ist, eine erste Berechnungsvorschrift genutzt wird, um die Fluidtemperatur aus der ersten und der zweiten Laufzeit oder aus einer aus der ersten und zweiten Laufzeit ermittelten Schallgeschwindigkeit im Fluid zu berechnen, und
- in dem Fall, dass der vorläufige Temperaturwert größer oder gleich zu dem ersten oder einem zweiten vorgegebenen Grenzwert ist, eine zweite Berechnungsvorschrift genutzt wird, um die Fluidtemperatur aus der ersten und der zweiten Laufzeit oder aus einer aus der ersten und zweiten Laufzeit ermittelten Schallgeschwindigkeit im Fluid zu berechnen.

Wie bereits obig erläutert wurde, ist der Zusammenhang zwischen Temperatur und Schallgeschwindigkeit für einige Fluide, insbesondere für Wasser beziehungsweise für wasserenthalte Fluide, nicht monoton, sodass die Fluidtemperatur nicht über ihren gesamten möglichen Wertebereich als Funktionen der Schallgeschwindigkeit beziehungsweise der ersten und zweiten Laufzeit definiert werden kann. Durch Nutzung der Temperatur am Maximum der Temperatur-Schallgeschwindigkeitskurve als erster vorgegebenen Grenzwert kann diese Kurve jedoch in zwei streng monotone Teilkurven aufgeteilt werden, sodass für Temperaturen unterhalb des ersten vorgegebenen Grenzwerts eine erste Funktion angegeben werden kann, die die Fluidtemperatur in Abhängigkeit der Schallgeschwindigkeit vorgibt, und für Temperaturen oberhalb des ersten vorgegebenen Grenzwert eine zweite Funktion angegeben werden kann, die die Fluidtemperatur in Abhängigkeit der Schallgeschwindigkeit vorgibt.

Wird für den zweiten Fall ein zweiter vorgegebener Grenzwert genutzt, sollte dieser insbesondere größer als der erste vorgegebene Grenzwert sein. Für vorläufige Temperaturwerte, die zwischen dem ersten und zweiten vorgegebenen Grenzwert liegen, kann insbesondere eine dritte Berechnungsvorschrift genutzt werden. Diese kann die Fluidtemperatur insbesondere ausschließlich oder zusätzlich in Abhängigkeit von der Schwingungsfrequenz des Empfangssignals vorgeben.

Dies kann zweckmäßig sein, da der Zusammenhang zwischen Temperatur und Schallgeschwindigkeit in der Umgebung des Maximums der Schallgeschwindigkeit geringe Steigungen aufweist, sodass in diesem Temperaturbereich bereits geringe Schallgeschwindigkeitsunterschiede relativ großen Temperaturunterschieden entsprechen. Daher führen bei ausschließlicher Berücksichtigung dieses Zusammenhangs bereits relativ kleine Fehler, beispielsweise ein geringes Rauschen, bei der Ermittlung der Schallgeschwindigkeit beziehungsweise der ersten und zweiten Laufzeit zu deutlichen Temperaturfehlern. Wie bereits obig erläutert wurde, ist der Zusammenhang zwischen der Schwingungsfrequenz und der Fluidtemperaturen hingegen für den gesamten relevanten Temperaturbereich zumindest näherungsweise linearer, sodass es im diskutierten Temperaturbereich zweckmäßig sein kann, unmittelbar den vorläufigen Temperaturwert als Fluidtemperatur des Fluids heranzuziehen oder die Fluidtemperatur als gewichtete Summe aus dem vorläufigen Temperaturwert und einem auf Basis der Schallgeschwindigkeit berechneten weiteren vorläufigen Temperaturwert zu berechnen. Der weitere vorläufige Temperaturwert kann insbesondere je nach Wert des vorläufigen Temperaturwertes entweder mittels der erste oder mittels der zweiten Berechnungsvorschrift ermittelt werden.

Der erste Ultraschallwandler kann zur Erzeugung des jeweiligen Ultraschallsignals für die Dauer eines Anregungsintervalls mit einem Wechselspannungssignal beaufschlagt werden, um den ersten Ultraschallwandler zu einer Oszillation anzuregen, wobei der Zeitabschnitt des Eingangssignals, für den die Schwingungsfrequenz des Empfangssignals ermittelt wird, in einem vorgegebenem Zeitabstand nach dem Ende des Anregungsintervalls beginnt. Alternativ oder ergänzend kann der Zeitabschnitt des Eingangssignals derart gewählt werden, dass eine Einhüllende des Empfangssignals zumindest zu Beginn des Zeitabschnitts abfällt.

Wie bereits eingangs erwähnt, wirkte sich die Fluidtemperatur des Fluids auf die Resonanzfrequenzen des ersten und zweiten Ultraschallwandlers beziehungsweise des gesamten Messsystems aus. Somit sind insbesondere die Schwingungsfrequenzen, die beim freien Schwingen des ersten beziehungsweise zweiten Ultraschallwandlers Auftreten, relevant für die Temperaturermittlung.

Der vorgegebene Zeitabstand ist insbesondere größer oder gleich zu der voraussichtlichen Laufzeit des Ultraschallsignals von dem ersten Ultraschallwandler zu dem zweiten Ultraschallwandler, sodass das in dem Zeitabschnitt empfangene Ultraschallsignal aus einem freien Nachschwingen des ersten Ultraschallwandler nach dem Anregungsende resultiert und/oder das Empfangssignal aus einem Nachschwingen des zweiten Ultraschallwandlers nach dem Ende des einlaufenden Ultraschallsignals resultiert. Die eine maximale voraussichtliche Laufzeit kann beispielsweise im Rahmen einer Kalibrierung der Messeinrichtung ermittelt werden und/oder die erwartete Laufzeit kann auf einer vorangehenden Messung basieren.

Der beschriebene Schwingungszustand kann ergänzend oder alternativ auch unmittelbar durch Auswertung der Einhüllenden erkannt werden. Eine Einhüllende kann beispielsweise durch Quadrieren und Tiefpassfiltern des Empfangssignals oder auch durch Analyse eines digitalisierten Empfangssignals ermittelt werden.

Es können die oder eine erste Laufzeit des Ultraschallsignals von dem ersten Ultraschallwandler zu dem zweiten Ultraschallwandler und die oder eine zweite Laufzeit des weiteren oder eines weiteren Ultraschallsignals von dem zweiten Ultraschallwandler zu dem ersten Ultraschallwandler ermittelt werden, wobei in Abhängigkeit der ersten und zweiten Laufzeit, einer bekannten Geometrie des Messvolumens und der in Abhängigkeit der Schwingungsfrequenz des Empfangssignals ermittelten Fluidtemperatur des Fluids ein Durchflussvolumen des durch das Messvolumen geführten Fluids bestimmt werden kann.

Es ist prinzipiell bekannt, dass das mittels der bekannten Laufzeitdifferenzmethode ermittelte Durchflussvolumen eine Temperaturabhängigkeit aufweist. Zur Berücksichtigung dieser Temperaturabhängigkeit wird, wie eingangs erläutert, typischerweise einen dedizierter Temperatursensor genutzt. Da es durch das erfindungsgemäße Verfahren jedoch möglich ist, die Fluidtemperatur auch ohne Nutzung eines dedizierten Temperatursensors robust abzuschätzen, wird es möglich, eine Temperaturkorrektur auch in einfach aufgebauten Messeinrichtungen ohne einen dedizierten Fluidtemperatursensor durchzuführen.

Zur Berücksichtigung der Fluidtemperatur bei der Durchflussbestimmung kann im Rahmen der Kalibrierung der Messeinrichtung beispielsweise ein zweidimensionales Kennfeld ermittelt werden, dass einer Vielzahl von Paaren aus Fluidtemperatur und Laufzeitunterschied zwischen der ersten und zweiten Laufzeit jeweils ein Durchflussvolumen zuordnet. Ein solches Kennfeld kann unmittelbar, beispielsweise durch Interpolation, zu Ermittlung des Durchflussvolumens genutzt werden. Es kann jedoch alternativ zweckmäßig sein, auf Basis des ermittelten Kennfeldes einen analytischen Zusammenhang zwischen den genannten Größen zu ermitteln, beispielsweise mittels einer Regressionsanalyse.

Die Erfindung betrifft zudem eine Messeinrichtung mit einem durch eine Innenwand der Messeinrichtung begrenzten Messvolumen, einem ersten und zweiten Ultraschallwandler und einer Steuereinrichtung, wobei die Steuereinrichtung dazu eingerichtet ist, den ersten Ultraschallwandler zur Abstrahlung eines Ultraschallsignals in ein durch das Messvolumen geführtes oder in dem Messvolumen befindliches Fluid anzusteuern und über den zweiten Ultraschallwandler ein das Ultraschallsignal betreffendes Empfangssignal zu erfassen. Die Steuereinrichtung ist hierbei dazu eingerichtet, für einen Zeitabschnitt des Empfangssignals eine Schwingungsfrequenz des Empfangssignals und in Abhängigkeit dieser Schwingungsfrequenz eine Fluidtemperatur des Fluids im Messvolumen zu ermitteln.

Die Messeinrichtung kann somit insbesondere zur Durchführung des erfindungsgemäßen Verfahrens eingerichtet sein. Unabhängig davon kann die erfindungsgemäße Messeinrichtung mit den obig zum erfindungsgemäßen Verfahren genannten Merkmalen weitergebildet werden und umgekehrt, um die jeweils genannten Vorteile zu erreichen.

Die Messeinrichtung kann insbesondere dazu dienen, ein Durchflussvolumen durch das Messvolumen zu ermitteln, wobei dieses, wie bereits obig zum erfindungsgemäßen Verfahren erläutert, in Abhängigkeit der ermittelten Fluidtemperatur ermittelt beziehungsweise korrigiert werden kann.

Zudem betrifft die Erfindung ein Leitungssystem, das einen Verbraucher und einen Wärme- und/oder Kältezähler, der zur Ermittlung einer dem Verbraucher mittels des Leitungssystems zugeführten Wärme- und/oder Kältemenge eingerichtet ist, umfasst, wobei der Wärme- und/oder Kältezähler die Messeinrichtung und einen Temperatursensor umfasst, wobei der Verbraucher in dem Leitungssystem zwischen der Messeinrichtung und dem Temperatursensor angeordnet ist, wobei die Messeinrichtung zur Ermittlung eines Durchflussvolumens des durch das Leitungssystem und somit durch das Messvolumen geführten Fluids eingerichtet ist, wobei die Steuereinrichtung dazu eingerichtet ist,
- einerseits die dem Verbraucher zugeführte Wärme- und/oder Kältemenge in Abhängigkeit des ermittelten Durchflussvolumens, eines Temperaturmesswertes des Temperatursensors und der ermittelten Fluidtemperatur des Fluids im Messvolumen zu ermitteln, und/oder
- andererseits eine die Einbauposition der Messeirichtung in dem Leitungssystem betreffende Einbauinformation in Abhängigkeit der ermittelten Fluidtemperatur des Fluids im Messvolumen und eines jeweiligen Temperaturmesswertes des Temperatursensors und/oder eines weiteren Temperatursensors des Wärme- und/oder Kältezählers, der in dem Leitungssystem auf der gleichen Seite des Verbrauchers wie die Messeinrichtung angeordnet ist, zu ermitteln.

Wird die Messeinrichtung als Teil eines Wärm- und/oder Kältezählers verwendet, kann es ausreichend sein, wenn der Wärm- und/oder Kältezähler nur einen Temperatursensoraufweist, da die in Wärmezählern genutzte, insbesondere mit dem Durchflussvolumen multiplizierte, Temperaturdifferenz als Differenz des über diesen Temperatursensor erfassten Temperaturmesswertes und der auf Basis der Schwingungsfrequenz des Empfangssignals ermittelten Fluidtemperatur ermittelt werden kann.

Ergänzend oder alternativ kann die Fluidtemperatur zur Ermittlung der Einbauposition beziehungsweise einer diese betreffenden Einbauinformationen genutzt werden. Die Ermittlung der Einbauposition kann zweckmäßig sein, da bei Wärme- und/oder Kältezählern die Messung des Durchflussvolumens typischerweise im Rücklauf erfolgt. Wird eine Installation im Vorlauf erkannt, kann es zweckmäßig sein, bei Inbetriebnahme hierauf hinzuweisen und/oder interne Betriebsparameter an den Betrieb im Vorlauf anzupassen, also beispielsweise eine unterschiedliche Kalibrierung zu wählen. Ist beispielsweise bekannt, dass dem Verbraucher im aktuellen Betriebszustand Wärme zugeführt wird, kann ein Einbau der Messeinrichtung im Vorlauf insbesondere dann erkannt werden, wenn die Fluidtemperatur den Temperaturmesswert übersteigt.

Werden zwei separate Temperatursensoren zu Ermittlung der Wärmedifferenz genutzt, so kann durch Vergleich von deren Temperaturmesswerten mit der ermittelten Fluidtemperatur im Messvolumen insbesondere erkannt werden, auf der Seite welches der Temperatursensoren bezüglich des Verbrauchers die Messeinrichtung angeordnet ist und somit die Ermittlung eines Durchflussvolumens erfolgt.

Weitere Vorteile und Einzelheiten der Erfindung zeigen die Folgen Ausführungsbeispiele sowie die zugehörigen Zeichnungen. Hierbei zeigen schematisch:
- Fig. 1: einen Ausführungsbespiel eines erfindungsgemäßen Leitungssystems, das ein Ausführungsbeispiele der erfindungsgemäßen Messeinrichtung umfasst,
- Fig. 2: einem beispielhaftes Empfangssignal der in Fig. 1 dargestellten Messeinrichtung,
- Fig. 3: ein Ablaufdiagramm eines Ausführungsbeispiels des erfindungsgemäßen Verfahrens zur Ermittlung einer Fluidtemperatur,
- Fig. 4: eine Streudiagramm der bei verschiedenen Fluidtemperaturen des Fluids beobachteten Schwingungsfrequenzen eines Empfangssignals eines Ultraschallwandlers, und
- Fig. 5: den Zusammenhang zwischen Fluidtemperatur und Schallgeschwindigkeit in Wasser.

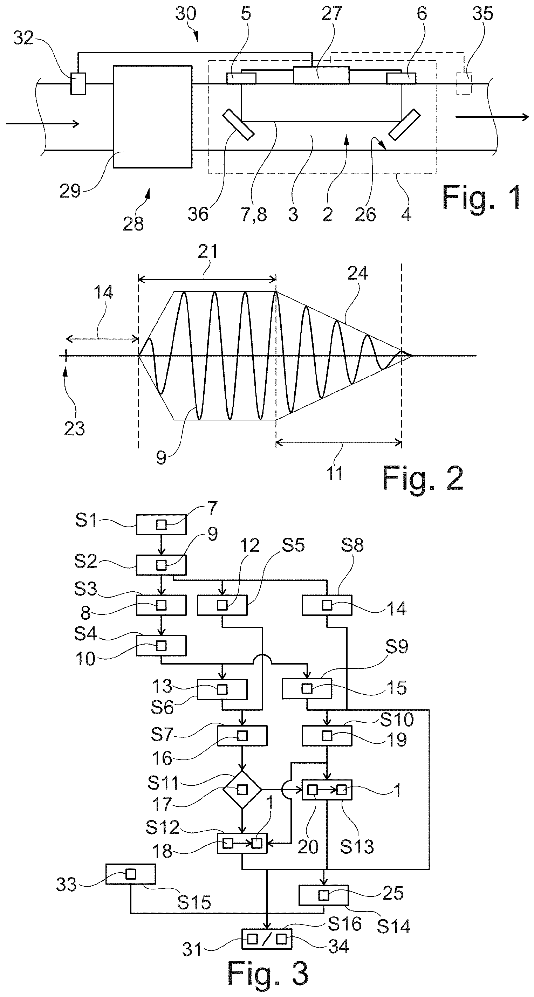

Fig. 1 zeigt einen Abschnitt eines Leitungssystem 28 zur Zuführung von Wärme und/oder Kälte zu einem Verbraucher 29. In den folgenden Erklärungen wird meist beispielhaft von einer Zuführung von Wärme ausgegangen. Hierzu wird dem Leitungssystem 28 im Bild von links ein Fluid 3, beispielsweise Wasser, mit einer Temperatur zugeführt, die oberhalb der Temperatur des Verbrauchers 29 liegt. Beim Durchströmen des Verbrauchers 29 wird somit Wärme von dem Fluid 3 an den Verbraucher 29 abgegeben, sodass beim Erreichen des rechten Bildbereichs beziehungsweise der Messeinrichtung 4 die Temperatur des Fluids 3 gegenüber dem Zufluss abgesenkt ist. Auf gleiche Weise kann man dem Verbraucher 29 auch Kälte zugeführt werden, wenn das Fluids 3 mit einer Temperatur unterhalb der Verbrauchertemperatur zugeführt wird.

Häufig ist es gewünscht, die dem Verbraucher 29 zugeführte Wärme- beziehungsweise Kältemenge zu erfassen, beispielsweise zu Abrechnungszwecken. In üblichen Wärme- und/oder Kältezählern werden hierzu typischerweise zwei Temperatursensoren 32, 35 auf verschiedenen Seiten des Verbrauchers 29 genutzt, um eine Temperaturänderung des Fluids 3 beim Durchströmen des Verbrauchers 29 zu erfassen. Durch Multiplikation der Temperaturdifferenz mit einem mittels der Messeinrichtung 4 erfassten Durchflussvolumen kann die zugeführte Wärme beziehungsweise Kälte quantifiziert werden.

Wie im Folgenden noch genauer erläutert werden wird, ist die die Steuereinrichtung 27 der Messeinrichtung 4 jedoch dazu ausgebildet, die Fluidtemperatur 1 in einem durch die Innenwand 26 der Messeinrichtung 4 begrenzten Messvolumen 2 auf Basis von Empfangssignalen 9, 10 der Ultraschallwandler 5, 6 der Messeinrichtung 4 zu ermitteln, die ohnehin zur Ermittlung des Durchflussvolumen 25 erfasst werden, sodass auf den Temperatursensor 35 verzichtet und somit der Aufbau des Wärme- und/oder Kältezähler 30 vereinfacht werden kann.

Diese Ausgestaltung wird im Folgenden zwar im Kontext des in Fig. 1 gezeigten Wärme- und/oder Kältezählers 30 erläutert. Eine solche Ausgestaltung der Messeinrichtung 4 kann jedoch auch dann zweckmäßig sein, wenn die Messeinrichtung 4 beispielsweise als reiner Durchflussvolumenzähler genutzt wird, ohne dass eine Wärmebilanz erfasst wird. Durchflussmessungen auf Basis von Ultraschallsignalen können nämlich eine deutliche Temperaturabhängigkeit aufweisen, sodass es zum Erreichen einer hohen Messgenauigkeit vorteilhaft ist, die Fluidtemperatur 1 des Fluids 3 im Messvolumen 2 zu erfassen und zu berücksichtigen. Da die Steuereinrichtung 27 eine solche Temperaturermittlung auch ohne einen dedizierten Temperatursensor 35 ermöglicht, kann auch in diesem Fall ein einfacherer und somit kleinerbauender und günstigerer Aufbau der Messeinrichtung 4 genutzt werden.

Das Prinzip der durch die Steuereinrichtung 27 genutzten Temperaturermittlung wird im Folgenden mit zusätzlichem Bezug auf Fig. 2 erläutert, die schematisch eine Empfangssignal 9 des Ultraschallwandler 6 zeigt, dass aus einem Betrieb des Ultraschallwandler 5 zur Abstrahlung des Ultraschallsignals 7 resultiert.

Das durch den Ultraschallwandler 5 abgestrahlt Ultraschallsignal 7 breitet sich durch das Fluid 3 im Messvolumen 2 aus, wobei es durch die Ultraschallspiegel 36 zweifach umgelenkt und somit dem Ultraschallwandler 6 zugeführt wird. Es wird somit nach einer Laufzeit 14 des Ultraschallsignals 7 nach dem Beginn 23 der Anregung von dem empfangenden Ultraschallwandler 5, 6 empfangen. Die Einhüllende 24 des Empfangssignals 9 steigt aufgrund einer Einschwingverzögerung der Ultraschallwandler 5, 6 zunächst für eine kurze Zeit an, wonach die Amplitude aufgrund der konstanten Anregungsamplitude des Ultraschallwandler 5 zunächst konstant bleibt. Nach dem Ende der aktiven Anregung schwingt der sendende Ultraschallwandler 5 noch nach, sodass für eine gewisse Zeit weiterhin ein Ultraschallschallsignal 7 mit abfallender Amplitude übertragen wird. Aus diesem Grunde und aufgrund des Nachschwingens des empfangenden Ultraschallwandlers 6 resultiert im Zeitabschnitt 11 eine abfallende Amplitude beziehungsweise Einhüllende 24 des Empfangssignal 9.

Das Empfangssignal 9 im Zeitabschnitt 11 resultiert somit aus einem Schwingenden der Ultraschallwandler 5, 6, während diese nicht aktiv mit einem Steuersignal der Steuereinrichtung 27 angeregt werde. Die Schwingungsfrequenz 12 des Empfangssignals im Zeitabschnitt 11 entspricht somit einer Resonanzfrequenz des Systems der Ultraschallwandler 5, 6 und des zur Ultraschallübertragung dienenden Fluids 3 und hängt somit von Eigenschaften des Fluids 3 und konkret von dessen Fluidtemperatur ab.

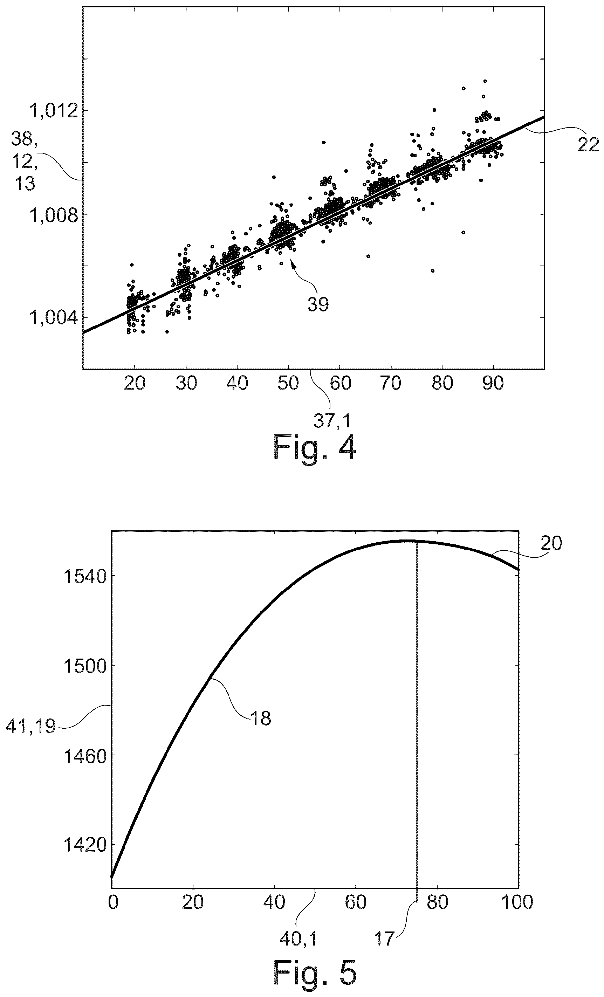

Hierbei wurde erkannt, dass der Zusammenhang 22 zwischen der Fluidtemperatur 1 und der Schwingungsfrequenz 12 zumindest näherungsweise linear ist. Dies ist beispielsweise in dem in Fig. 4 gezeigten Streudiagramm erkennbar, das für eine Vielzahl von Messungen 39 während einer stufenweisen Anhebung und Absenkung der auf der x-Achse 37 in °C gezeigten Fluidtemperatur 1 auf der y-Achse 38 die jeweilige Schwingungsfrequenz 12, 13 des jeweiligen Empfangssignals 9, 10 in MHz zeigt. Die Messungen 39 erfolgten teils für ein Signalausbreitung in Strömungsrichtung und teils für eine Signalausbreitung entgegen der Strömungsrichtung. Insbesondere aufgrund der stufenartigen Anhebung der Fluidtemperatur 1 und die hierdurch bei Teilen der Messungen 39 auftretenden Temperaturinhomogenität im Fluid 3 streuen die gezeigten Messungen 39 relativ stark. Der lineare Zusammenhang 22 zwischen der Fluidtemperatur 1 und der Schwingungsfrequenz 12 ist jedoch auf Basis der gezeigten Messungen dennoch klar erkenn- und quantifizierbar.

Ist die Laufzeit 14 des Ultraschallsignals 7 bekannt beziehungsweise wird diese gemessen, so kann der Beginn des Zeitabschnitts 11 so gewählt werden, dass er gegenüber dem Beginn der Anregung des Ultraschallwandlers 7 um die Summe aus der Dauer 21 des Anregungsintervalls, während dem der Ultraschallwandler 5 mit einem Wechselspannungssignal beaufschlagt wird, und der Laufzeit 14 verzögert ist. Alternativ wäre es auch möglich, den Zeitabschnitt auf Basis der Einhüllende 24 des Empfangssignals 9 so zu wählen, dass die Einhüllende 24 während des Zeitabschnitts 11 abfällt. Durch beide Ansätze kann erreicht werden, dass das Empfangssignal 9 in dem Zeitabschnitt 11 aus einem freien Schwingen der Ultraschallwandler 5, 6 ohne eine Anregung durch die Steuereinrichtung 27 resultiert, womit die Schwingungsfrequenz 12, wie bereits obig erläutert, linear mit der Fluidtemperatur 1 zusammenhängt und die Fluidtemperatur 1 somit aus dieser Schwingungsfrequenz 12 ermittelt werden kann.

Wie bereits im allgemeinen Teil erläutert wurde, kann eine Temperaturermittlung, die ausschließlich auf der Schwingungsfrequenz 12 basiert, fehleranfällig beziehungsweise ungenau sein. Ein Ansatz zur robusteren und genaueren Ermittlung der Fluidtemperatur 1 sowie zweckmäßige Schritte zur Weiterverarbeitung der Fluidtemperatur 1 werden im Folgenden mit Bezug auf das in Fig. 3 gezeigte Ablaufdiagramm erläutert.

Dort wird in Schritt S1 zunächst der Ultraschallwandler 5 durch die Steuereinrichtung 27 angesteuert, um das Ultraschallsignal 7 in das Fluid 3 abzustrahlen. Das Ultraschallsignal 7 wird durch die Ultraschallspiegel 36 mehrfach umgelenkt, um es zum Ultraschallwandler 6 zu führen. Über diesen erfasst die Steuereinrichtung 27 in Schritt S2 anschließend ein das Ultraschallsignal 7 betreffendes Empfangssignal 9.

Um die Ermittlung einer Schallgeschwindigkeit 19 im Fluid 3 auch bei einem Strömen des Fluids 3 durch das Messvolumen 2 robust erfassen zu können und um eine Ermittlung eines Durchflussvolumens zu ermöglichen, wird im Beispiel der obig erläuterte Messvorgang in umgekehrter Richtung wiederholt. Hierzu wird in Schritt S3 der Ultraschallwandler 6 durch die Steuereinrichtung 27 angesteuert, um das Ultraschallsignal 8 in das Fluid 3 abzustrahlen. Das Ultraschallsignal 8 wird über die Ultraschallspiegel 36 zum Ultraschallwandler 5 geführt, um in Schritt S4 ein das Ultraschallsignale 8 betreffendes Empfangssignal 10 zu erfassen.

In Schritt S5 wird dann, wie bereits obig erläutert, ein Zeitabschnitt 11 des Empfangssignals 9 ausgewählt, in dem das Empfangssignal durch ein Nachschwingen der Ultraschallwandler 5, 6 und somit durch eine Eigenfrequenz des Messesystems geprägt ist, und es wird die Schwingungsfrequenz 12 des Empfangssignals 9 in diesem Zeitabschnitt 11 ermittelt. Hierzu kann das Empfangssignal 9 beziehungsweise der Zeitabschnitt 11 beispielsweise nach einer Digitalisierung fouriertransformiert werden, um die dominante Frequenz aufzufinden, oder die Schwingungsfrequenz 12 kann beispielsweise auf Basis von ermittelten Zeitabständen zwischen Nulldurchgängen des Empfangssignals 9 ermittelt werden.

Prinzipiell wäre möglich, die Fluidtemperatur in dem im Messvolumen 2 unmittelbar auf Basis dieser Schwingungsfrequenz 12 und dem bereits mit Bezug auf Fig. 4 erläuterten linearen Zusammenhang 22 zwischen dieser Schwingungsfrequenz 12 und der Fluidtemperatur 1 zu ermitteln. Da in dem erläuterten Verfahren jedoch ohnehin das Empfangssignal 10 vorliegt, wird im Beispiel auch dieses verwendet, um die Genauigkeit der Abschätzung zu verbessern. Hierzu wird in Schritt S6, insbesondere auf die bereits zu Schritt S5 erläuterte Weise, ein Zeitabschnitt des Empfangssignals 10 ausgewählt, in dem das Empfangssignal durch ein Nachschwingen der Ultraschallwandler 5, 6 und somit durch eine Eigenfrequenz des Messesystems geprägt ist, und es wird die Schwingungsfrequenz 13 des Empfangssignals 10 in diesem Zeitabschnitt ermittelt.

Auf Basis des in Fig. 4 gezeigten Zusammenhangs 22 zwischen der jeweiligen Schwingungsfrequenz 12, 13 und der Fluidtemperatur 1 kann in Schritt S7 dann ein vorläufiger Temperaturwert 16 für die Fluidtemperatur 1 ermittelt werden. Aufgrund der Linearität dieses Zusammenhangs 22 kann der vorläufige Temperaturwert 16 im Beispiel wahlfrei entweder auf Basis des Durchschnitts der Schwingungsfrequenzen 12, 13 ermittelt werden oder die Durchschnittsbildung kann zwischen separat ermittelten vorläufige Temperaturwerten für die beiden Schwingfrequenzen 12, 13 erfolgen.

Der Temperaturwert 16 wird in der gezeigten Verfahrensausgestaltung zunächst nur als vorläufiger Temperaturwert 16 für die Fluidtemperatur 1 verwendet, da, wie im Folgenden noch erläutert wird, durch eine zusätzliche Ermittlung und Berücksichtigung der Schallgeschwindigkeit 19 im Fluid 3 die Robustheit und Genauigkeit der Ermittlung weiter verbessert werden kann.

Hierzu wird in Schritt S8 zunächst eine erste Laufzeit 14 des Ultraschallsignals 7 von dem ersten Ultraschallwandler 5 zu dem zweiten Ultraschallwandler 6 ermittelt. Da die zeitliche Lage des Empfangssignal 9 bezüglich des Beginns 23 der Anregung des Ultraschallwandlers 5 bekannt ist, kann hierzu beispielsweise ermittelt werden, zu welchem Zeitpunkt des Empfangssignals 9 dieses beziehungsweise dessen Einhüllende 24 einen Grenzwert überschreitet. Entsprechend wird in Schritt S9 eine zweite Laufzeit 15 des Ultraschallsignals 8 von dem zweiten Ultraschallwandler 6 zu dem ersten Ultraschallwandler 5 ermittelt.

Da die Länge des Ausbreitungspfades der Ultraschallsignale 7, 8 aufgrund der bekannten Messgeometrie bekannt ist, kann die Schallgeschwindigkeit 19 im Fluid in Schritt S10 dann als Quotient aus der Wegstrecke und der Summe der Laufzeiten 14, 15 ermittelt werden. Optional kann die Summe vor der Quotientenbildung noch mit einem Offset beaufschlagt werden, beispielsweise um bekannte Verzögerungen der Ansteuerung beziehungsweise Messwerterfassung zu berücksichtigen.

Im gezeigten Beispiel wird davon ausgegangen, dass das durch das Messvolumen 2 geführte Fluid 3 bekannt ist. Für bekannte Fluide kann aus Tabellenwerken oder durch vorbereitende Messungen bestimmt werden, wie hoch die Schallgeschwindigkeit 19 im jeweiligen Fluid 3 bei verschiedenen Fluidtemperaturen 1 ist. Dieser Zusammenhang ist in Fig. 5 beispielhaft für Wasser dargestellt, wobei auf der x-Achse 40 Fluidtemperatur 1 in °C und auf der y-Achse 41 die Schallgeschwindigkeit 19 in m/s aufgetragen ist. Für einige Fluide, beispielsweise für Wasser und wasserhaltige Flüssigkeiten 3, steigt die Schallgeschwindigkeit 19 zunächst mit steigender Fluidtemperatur 1 an, fällt jedoch ab dem Erreichen einer maximal-Schallgeschwindigkeit, die in Fig. 5 bei ungefähr 73 °C liegt, wieder ab. Allein auf Basis des in Fig. 5 gezeigten Zusammenhangs ist es somit im Beispiel nicht möglich, der in Schritt S10 ermittelten Schallgeschwindigkeit 19 eindeutig eine Fluidtemperatur 1 zuzuordnen.

Daher wird in Schritt S11 geprüft, ob der in Schritt S7 auf Basis der Schwingungsfrequenzen 12, 13 ermittelte vorläufige Temperaturwert 16 kleiner oder gleich zu einem vorgegebenen Grenzwert 17 ist, der im Beispiel mit dem Maximum der Schallgeschwindigkeit in Fig. 5 zusammenfällt. Ist dies der Fall, so wird in Schritt S12 eine erste Berechnungsvorschrift 18 genutzt, die dem Zeig des in Fig. 5 gezeigten Zusammenhangs links des Grenzwertes 17 entspricht, um die Fluidtemperatur 1 aus der Schallgeschwindigkeit 19 im Fluid 3 zu berechnen. Anderenfalls wird in Schritt S13 eine zweite Berechnungsvorschrift 20 genutzt, die dem Zeig des in Fig. 5 gezeigten Zusammenhangs rechts des Grenzwertes 17 entspricht, um die Fluidtemperatur 1 aus Schallgeschwindigkeit 19 im Fluid 3 zu berechnen.

Im Beispiel wird somit der in Fig. 4 gezeigte Zusammenhang zwischen der Fluidtemperatur 1 und den Schwingungsfrequenzen 12, 13 genutzt, um die Uneindeutigkeit des in Fig. 5 gezeigten Zusammenhangs zwischen der Fluidtemperatur und der Schallgeschwindigkeit 19 aufzuheben.

In Schritt S14 wird dann in Abhängigkeit der ersten und zweiten Laufzeit 14, 15, einer bekannten Geometrie des Messvolumens 2 und der Fluidtemperatur 1 ein Durchflussvolumen 25 des durch das Messvolumen 2 geführten Fluids 3 bestimmt. Beispielsweise kann eine zweidimensionale Look-up-Tabelle oder ein entsprechender analytischer Zusammenhang, die beziehungsweise der die Geometrie des Messvolumens 2 bereits berücksichtigt, genutzt werden, um Paaren aus einer jeweiligen Laufzeitdifferenz zwischen der ersten und zweiten Laufzeit 14, 15 und einer jeweiligen Fluidtemperatur einem jeweiligen Durchflussvolumen zuzuordnen.

Wie bereits erläutert wurde, wird die Messeinrichtung 4 in dem in Fig. 1 gezeigten Beispiel als Teil eines Wärme- und/oder Kältezählers 30 genutzt. Daher wird in Schritt S15 durch die Steuereinrichtung mittels des im Vorlauf des Verbrauchers 29 angeordneten Temperatursensors 32 ein Temperaturmesswert 33 für die Temperatur des Fluids vor einem durchströmen des Verbrauchers 28 ermittelt. Zur Ermittlung der zugeführten Wärme- und/oder Kältemenge 31 kann das ermittelte Durchflussvolumen 25 dann mit einer Temperaturdifferenz zwischen dem Temperaturmesswert 33 und der in Schritt S12 oder S13 ermittelten Fluidtemperatur 1 des Fluids 3 im Messvolumen 2 multipliziert werden.

Wenn für den aktuellen Betriebszustand des Wärme- und/oder Kältezählers 30 bekannt ist, ob dem Verbraucher 29 aktuelle Wärme oder Kälte zugeführt wird, kann durch Vergleich des Temperaturmesswerts 33 mit der ermittelten Fluidtemperatur 1 des Fluids 3 im Messvolumen 2 auch eine Einbauinformation 34 ermittelt werden, die angibt, ob die das Durchflussvolumen 25 ermittelnde Messeinrichtung 4 im Vorlauf oder im Rücklauf des Verbrauchers 29 angeordnet ist. Auf Basis dieser Einbauinformation 34 können beispielsweise interne Parameter des Wärme- und/oder Kältezählers 30 angepasst werden, beispielsweise Kalibriergrößen.

### Bezugszeichenliste

- 1: Fluidtemperatur
- 2: Messvolumen
- 3: Fluid
- 4: Messeinrichtung
- 5, 6: Ultraschallwandler
- 7, 8: Ultraschallsignal
- 9, 10: Empfangssignal
- 11: Zeitabschnitt
- 12, 13: Schwingungsfrequenz
- 14, 15: Laufzeit
- 16: Temperaturwert
- 17: Grenzwert
- 18: Berechnungsvorschrift
- 19: Schallgeschwindigkeit
- 20: Berechnungsvorschrift
- 21: Dauer
- 22: Zusammenhang
- 23: Beginn
- 24: Einhüllende
- 25: Durchflussvolumen
- 26: Innenwand
- 27: Steuereinrichtung
- 28: Leitungssystem
- 29: Verbraucher
- 30: Kältezähler
- 31: Kältemenge
- 32: Temperatursensor
- 33: Temperaturmesswert
- 34: Einbauinformation
- 35: Temperatursensor
- 36: Ultraschallspiegel
- 37: x-Achse
- 38: y-Achse
- 39: Messung
- 40: x-Achse
- 41: y-Achse

- S1 - S16: Schritt

## Patentansprüche

1. Verfahren zur Ermittlung einer Fluidtemperatur (1) eines durch ein Messvolumen (2) geführten oder in dem Messvolumen (2) befindlichen Fluids (3) durch eine Messeinrichtung (4) mit mindestens einem ersten und einem zweiten Ultraschallwandler (5, 6), wobei durch den ersten Ultraschallwandler (5) ein Ultraschallsignal (7) abgestrahlt und über das Fluid (3) zu dem zweiten Ultraschallwandler (6) übertragen wird, wodurch über den zweiten Ultraschallwandler (6) ein Empfangssignal (9) erfasst wird, **dadurch gekennzeichnet,**
**dass** für einen Zeitabschnitt (11) des Empfangssignals (9) eine Schwingungsfrequenz (12) des Empfangssignals (9) ermittelt wird, wobei die Fluidtemperatur (1) in Abhängigkeit der Schwingungsfrequenz (12) ermittelt wird.

2. Verfahren nach Anspruch 1,
**dadurch gekennzeichnet,**
**dass** eine erste Laufzeit (14) des Ultraschallsignals (7) von dem ersten Ultraschallwandler (5) zu dem zweiten Ultraschallwandler (6) und eine zweite Laufzeit (15) eines weiteren Ultraschallsignals (8) von dem zweiten Ultraschallwandler (6) zu dem ersten Ultraschallwandler (5) ermittelt wird, wobei die Fluidtemperatur (1) in zusätzlicher Abhängigkeit von der ersten und zweiten Laufzeit (14, 15) ermittelt wird.

3. Verfahren nach Anspruch 2,
**dadurch gekennzeichnet,**
**dass** zunächst in Abhängigkeit der Schwingungsfrequenz (12) des Empfangssignals (9) ein vorläufiger Temperaturwert (16) für die Fluidtemperatur (1) ermittelt wird, wonach
- in dem Fall, dass der vorläufige Temperaturwert (16) kleiner oder gleich zu einem ersten vorgegebenen Grenzwert (17) ist, eine erste Berechnungsvorschrift (18) genutzt wird, um die Fluidtemperatur (1) aus der ersten und der zweiten Laufzeit (14, 15) oder aus einer aus der ersten und zweiten Laufzeit (14, 15) ermittelten Schallgeschwindigkeit (19) im Fluid (3) zu berechnen, und
- in dem Fall, dass der vorläufige Temperaturwert (16) größer oder gleich zu dem ersten oder einem zweiten vorgegebenen Grenzwert (17) ist, eine zweite Berechnungsvorschrift (20) genutzt wird, um die Fluidtemperatur (1) aus der ersten und der zweiten Laufzeit (14, 15) oder aus einer aus der ersten und zweiten Laufzeit (14, 15) ermittelten Schallgeschwindigkeit (19) im Fluid (3) zu berechnen.

4. Verfahren nach einem der vorangehenden Ansprüche,
**dadurch gekennzeichnet,**
**dass** der erste Ultraschallwandler (5) zur Erzeugung des jeweiligen Ultraschallsignals (7) für die Dauer (21) eines Anregungsintervalls mit einem Wechselspannungssignal beaufschlagt wird, um den ersten Ultraschallwandler (5) zu einer Oszillation anzuregen, wobei der Zeitabschnitt (11) des Eingangssignals (9), für den die Schwingungsfrequenz (12) des Empfangssignals (9) ermittelt wird, in einem vorgegebenem Zeitabstand nach dem Ende des Anregungsintervalls beginnt, und/oder dass der Zeitabschnitt (11) des Eingangssignals (9) derart gewählt wird, dass eine Einhüllende (24) des Empfangssignals (9) zumindest zu Beginn des Zeitabschnitts (11) abfällt.

5. Verfahren nach einem der vorangehenden Ansprüche,
**dadurch gekennzeichnet,**
**dass** die oder eine erste Laufzeit (14) des Ultraschallsignals (7) von dem ersten Ultraschallwandler (5) zu dem zweiten Ultraschallwandler (6) und die oder eine zweite Laufzeit (15) des weiteren oder eines weiteren Ultraschallsignals (8) von dem zweiten Ultraschallwandler (6) zu dem ersten Ultraschallwandler (5) ermittelt wird, wobei in Abhängigkeit der ersten und zweiten Laufzeit (14, 15), einer bekannten Geometrie des Messvolumens (2) und der in Abhängigkeit der Schwingungsfrequenz (12) des Empfangssignals (9) ermittelten Fluidtemperatur (1) des Fluids (3) ein Durchflussvolumen (25) des durch das Messvolumen (2) geführten Fluids (3) bestimmt wird.

6. Messeinrichtung mit einem durch eine Innenwand (26) der Messeinrichtung (4) begrenzten Messvolumen (2), einem ersten und zweiten Ultraschallwandler (5, 6) und einer Steuereinrichtung (27), wobei die Steuereinrichtung (27) dazu eingerichtet ist, den ersten Ultraschallwandler (5) zur Abstrahlung eines Ultraschallsignals (7) in ein durch das Messvolumen (2) geführtes oder in dem Messvolumen (2) befindliches Fluid (3) anzusteuern und über den zweiten Ultraschallwandler (6) ein das Ultraschallsignal (7) betreffendes Empfangssignal (9) zu erfassen,
**dadurch gekennzeichnet,**
**dass** die Steuereinrichtung (27) dazu eingerichtet ist, für einen Zeitabschnitt (11) des Empfangssignals (9) eine Schwingungsfrequenz (12) des Empfangssignals (9) und in Abhängigkeit dieser Schwingungsfrequenz (9) eine Fluidtemperatur (1) des Fluids (3) im Messvolumen (2) zu ermitteln.

7. Leitungssystem mit einer Messeinrichtung nach Anspruch 6,
**dadurch gekennzeichnet,**
**dass** das Leitungssystem (28) einen Verbraucher (29) und einen Wärme- und/oder Kältezähler (30), der zur Ermittlung einer dem Verbraucher (29) mittels des Leitungssystems (28) zugeführten Wärme- und/oder Kältemenge (31) eingerichtet ist, umfasst, wobei der Wärme- und/oder Kältezähler (30) die Messeinrichtung (4) und einen Temperatursensor (32) umfasst, wobei der Verbraucher (29) in dem Leitungssystem (28) zwischen der Messeinrichtung (4) und dem Temperatursensor (32) angeordnet ist, wobei die Messeinrichtung (4) zur Ermittlung eines Durchflussvolumens (25) des durch das Leitungssystem (28) und somit durch das Messvolumen (2) geführten Fluids (3) eingerichtet ist, wobei die Steuereinrichtung (27) dazu eingerichtet ist,
- einerseits die dem Verbraucher (29) zugeführte Wärme- und/oder Kältemenge (31) in Abhängigkeit des ermittelten Durchflussvolumens (25), eines Temperaturmesswertes (33) des Temperatursensors (32) und der ermittelten Fluidtemperatur (1) des Fluids (3) im Messvolumen (2) zu ermitteln, und/oder
- andererseits eine die Einbauposition der Messeirichtung in dem Leitungssystem betreffende Einbauinformation (34) in Abhängigkeit der ermittelten Fluidtemperatur (1) des Fluids (3) im Messvolumen (2) und eines jeweiligen Temperaturmesswertes (33) des Temperatursensors (32) und/oder eines weiteren Temperatursensors (35) des Wärme- und/oder Kältezählers (30), der in dem Leitungssystem (28) auf der gleichen Seite des Verbrauchers (29) wie die Messeinrichtung (4) angeordnet ist, zu ermitteln.
